(19) Europäisches Patentamt

European Patent Office

Office européen des brevets

(11) **EP 1 111 950 B1**

(12) **EUROPÄISCHE PATENTSCHRIFT**

(45) Veröffentlichungstag und Bekanntmachung des Hinweises auf die Patenterteilung:
**25.10.2006 Patentblatt 2006/43**

(51) Int Cl.:
***H04Q 7/38*** *(2006.01)*

(21) Anmeldenummer: **00204209.1**

(22) Anmeldetag: **27.11.2000**

(54) **Mobilfunkgerät eines zellularen Netzwerkes zum Übertragen von Sprache und/oder Daten und Verfahren für ein solches**

Mobile radio device in a cellular network for transmission of speech and/or data and method therefor

Appareil mobile à radio dans un réseau cellulaire pour la transmission de parole et/ou de données et procédé correspondant

(84) Benannte Vertragsstaaten:
**DE FR GB**

(30) Priorität: **04.12.1999 DE 19958556**

(43) Veröffentlichungstag der Anmeldung:
**27.06.2001 Patentblatt 2001/26**

(73) Patentinhaber:
- **Philips Intellectual Property & Standards GmbH 20099 Hamburg (DE)**
Benannte Vertragsstaaten:
**DE**
- **Koninklijke Philips Electronics N.V. 5621 BA Eindhoven (NL)**
Benannte Vertragsstaaten:
**FR GB**

(72) Erfinder: **Richter, T.,**
**Philips Corp. Intell. Property GmbH**
**52064 Aachen (DE)**

(74) Vertreter: **Volmer, Georg et al**
**Philips Intellectual Property & Standards GmbH,**
**Postfach 50 04 42**
**52088 Aachen (DE)**

(56) Entgegenhaltungen:
**US-A- 5 640 675**

**Beschreibung**

Die Erfindung betrifft ein Mobilfunkgerät für ein zellulares Netzwerk zum Übertragen von Sprache und/oder Daten und ein Verfahren zur Ermittlung ob sich ein solches Mobilfunkgerät zwischen einem Ausschalten und dem nächsten Einschalten räumlich bewegt hat.

Mobilfunkgeräte für analoge oder digitale zellulare Netzwerke zum Übertragen von Sprache und/oder Daten, die einem Mobilfunkteilnehmer zum Aufbau einer Telefon-, einer Daten- oder einer sonstigen Verbindung über eine Funkschnittstelle unabhängig vom aktuellen Aufenthaltsort zur Verfügung stehen, sind aus der Praxis bekannt. Bei solchen Mobilfunkgeräten kann es von erheblicher Bedeutung sein, ob das Mobilfunkgerät in einem Zeitraum nach einem Ausschalten des Mobilfunkgerätes und nach einem erneuten Einschalten räumlich bewegt wurde.

Zellulare Netzwerke, wie DCS1800 (Digital Communication System bei 1800 MHz), GSM (Global System of Mobile Communication), das in den USA verwendete PCS1900 (Personal Communication System bei 1900 MHz) oder DAMPS (Digital Advanced Mobile Phone System), weisen zur Versorgung der Mobilfunkgeräte eine Anzahl von fest installierten Basisstationen auf, die den Mobilfunkteilnehmern Funkressourcen zuweisen. Jede der Basisstationen deckt ein bestimmtes Gebiet ab, in dem ein Mobilfunkgerät über die jeweilige Basisstation einen Dienst in Anspruch nehmen kann.

Die Mobilfunkgeräte müssen, da sie von den Benutzern zwischen einem Aus- und einem Einschalten bewegt werden können, bei jedem Einschalten eine Basisstation ermitteln, über die angeforderte Verbindungen aufgebaut werden können.

Die Basisstationen, zwischen denen das Mobilfunkgerät an einem bestimmten Aufenthaltsort wählen kann, weisen durch den Einsatz verschiedener Parameter, beispielsweise durch den Einsatz verschiedener Kontroll-Frequenzen, unterschiedliche Kanäle auf, wobei jedem Netzwerk nur eine begrenzte Anzahl an möglichen Kanälen zur Verfügung steht. Die Kanäle können beispielsweise durch die Vorgabe eines Frequenzbandes bestimmt sein, innerhalb dem verschiedene Kanäle mit einer bestimmten Bandbreite genutzt werden können. Hinzu kommt, dass sich in einem Netzwerk gewöhnlich verschiedene Dienstanbieter die Gesamtmenge der zugeteilten Kanäle teilen.

Wenn ein Mobilfunkgerät beim Einschalten keine Kenntnis darüber hat, in welcher Umgebung es sich befindet, wird es zunächst für alle in Frage kommenden Kanäle eine Größe erfassen, die ein Maß für den Abstand des Mobilfunkgeräts von der Basisstation ist, die den Kanal zur Verfügung stellt. Die erfasste Größe besteht dabei in der Regel aus dem Empfangspegel. Anschließend wird das Mobilfunkgerät für einen Kanal mit einer "guten" Größe, d.h. in der Regel mit einem ausreichend hohem Empfangspegel, überprüfen, ob dieser Kanal für den gewünschten Dienst zur Verfügung steht. Auch wird der Mobilfunkteilnehmer bei mehreren Anbietern im Netz einen bestimmten dieser Anbieter auswählen wollen, beispielsweise, weil die Gebühr für einen Dienst bei den verschiedenen Anbietern unterschiedlich ist. Diese Auswahl eines Kanals ist ein zeit- und energieaufwendiger Prozess, da hierzu gewöhnlich zunächst eine Synchronisierung mit der jeweiligen Basisstation erforderlich ist und übertragene Informationen gelesen werden müssen. Synchronisierungs- und sonstige Signale werden zudem eventuell nur in größeren Zeitabständen ausgesendet. In einigen Fällen ist sogar ein bidirektionaler Datenaustausch zwischen Basisstation und Mobilfunkgerät erforderlich, bevor der Mobilfunkteilnehmer einen gewünschten Dienst in Anspruch nehmen kann, insbesondere, da einige Anbieter ihre Dienste nicht allen Mobilfunkteilnehmern anbieten.

Der Mobilfunkteilnehmer ist jedoch daran interessiert, dass er einen Dienst so schnell wie möglich nach dem Einschalten seines Mobilfunkgerätes in Anspruch nehmen kann. Müssen jeweils alle in Frage kommenden Kanäle durchsucht werden, um den besten Kanal zu finden, so ist ein rasches zur Verfügung stellen eines Dienstes nicht möglich.

Um den Prozess der Kanalfindung zumindest für den Fall zu beschleunigen, dass das Mobilfunkgerät zwischen einem Ausschalten und einem erneuten Einschalten nicht bewegt wurde, ist es üblich, eine Liste mit Kanälen abzuspeichern, die an dem aktuellen Aufenthaltsort voraussichtlich nutzbar sind und die beim Einschalten als erstes durchsucht werden sollen. Diese Liste wird entweder von den Basisstationen zur Verfügung gestellt oder ist in dem Mobilfunkgerät abgespeichert. Sie wird eingesetzt, wenn sich bei einer Überprüfung der entsprechenden Empfangspegel nach dem Einschalten ergibt, dass Kanäle mit einem guten Empfangspegel in der Liste enthalten sind. Die Liste wird vor jedem Ausschalten des Mobilfunkgerätes aktualisiert und kann die Zeit deutlich verkürzen, die erforderlich ist, um einen Dienst zur Verfügung zu stellen, wenn sich das Mobilfunkgerät nahezu an der gleichen Stelle befindet, wie vor dem Ausschalten.

Für den Fall, dass das Mobilfunkgerät zwischen dem Aus- und dem Einschalten räumlich bewegt wurde, weist diese Vorgehensweise jedoch einen erheblichen Nachteil auf.

Wenn sich der Mobilfunkteilnehmer mit dem Mobilfunkgerät an einen anderen Aufenthaltsort begeben hat, möglicherweise sogar in ein anderes Land, so werden normalerweise einige der Kanäle in der gespeicherten Liste zwar einen guten Empfangspegel aufweisen, aber von einem anderen Anbieter verwendet werden. Das wird von dem Mobilfunkgerät aber erst erkannt, wenn es zeit- und energieaufwendig überprüft hat, ob eine Verbindung über diesen Kanal möglich ist. Erst danach wird die Suche auf andere Kanäle ausgeweitet, um einen Kanal zu finden, der an diesem Ort von dem gewünschten Anbieter genutzt wird.

Der gesamte Suchprozess nimmt immer dann mehr Zeit in Anspruch als erforderlich, wenn zunächst die gespeicherte Liste in der Reihenfolge der zugehörigen Empfangspegel ohne Erfolg durchsucht wurde und daraufhin ein Durchsuchen aller Kanäle in Reihenfolge der zugehörigen Empfangspegel erforderlich ist.

Auch wenn zunächst nur überprüft wird, ob die Empfangspegel der gespeicherten Kanäle für eine Verbindung ausreichend sind, wird in dem Fall, dass kein brauchbarer Kanal gefunden wird, mehr Zeit benötigt, als wenn von vornherein die Gesamtheit der Kanäle zugrunde gelegt würde. Schließlich muss im Anschluss an die Überprüfung der gespeicherten Liste doch noch die Gesamtheit oder zumindest der Rest der Kanäle gemessen und auf ihre Verwendbarkeit hin untersucht werden.

Energie- und zeitaufwendige Verfahren sollten aber zum einen für einen schnellen Verbindungsaufbau und zum anderen zum Erzielen einer möglichst hohen stand-by Zeit für die Mobilfunkgeräte vermieden werden.

Die Druckschrift US 5,640,675 schlägt deshalb vor, eine erste Liste von Kontroll-Frequenzen zu speichern, die von den Basisstationen des Gebiets übermittelt werden, in dem sich das Mobilfunkgerät in dem Augenblick befindet. Jeder Basisstation ist dabei eine Kontroll-Frequenz zugeordnet, mit der sie Synchronisierungs- und sonstige Signale aussendet und über die eine Synchronisation der Mobilfunkgeräte mit dieser Basisstation erfolgen muss. Zu der ersten Liste wird bei jedem Verbindungsaufbau für jede Frequenz der Empfangspegel gemessen. Des weiteren soll eine zweite Liste mit Kontroll-Frequenzen und den dazu gehörigen Empfangspegeln gespeichert werden, wobei hierfür die Kontroll-Frequenzen mit den höchsten Empfangspegeln ausgewählt werden. Beim Verbindungsaufbau werden dann alle Empfangspegel der zweiten Liste mit den beim Verbindungsaufbau gemessenen Empfangspegeln der entsprechenden Frequenzen der ersten Liste verglichen. Wenn für jede Frequenz aus der zweiten Liste der Empfangspegel in der ersten und in der zweiten Liste im wesentlichen gleich ist, so wird die Kontroll-Frequenz mit dem höchsten Empfangspegel der ersten Liste für die Verbindung gewählt, ansonsten erfolgt eine Synchronisation mit allen Frequenzen des Netzwerkes in Reihenfolge abfallender Empfangspegel, bis eine Kontroll-Frequenz des gewünschten Unternetzwerks gefunden ist. Wenn die Empfangspegel von nur einer Frequenz in der ersten und der zweiten Liste erheblich voneinander abweichen, so muss bei dem Verfahren gemäß der US 5,640,675 bereits davon ausgegangen werden, dass sich das Mobilfunkgerät bewegt hat, da hier lediglich eine sehr beschränkte Anzahl an Frequenzen für den Vergleich zur Verfügung steht. Es kann jedoch vorkommen, dass die Kontroll-Frequenz einer Basisstation geändert wird, so dass eine Verwerfung auch dann erfolgt, wenn das Mobilfunkgerät nicht bewegt wurde. Somit werden immer wieder die Frequenzen im gesamten Frequenzspektrum des Netzwerkes durchsucht werden, obwohl eine Bewegung des Mobilfunkgeräts nur fälschlicherweise angenommen wurde.

Der Erfindung liegt die Aufgabe zugrunde, ein Mobilfunkgerät für ein zellulares Netzwerkes zum Übertragen von Sprache und/oder Daten und ein Verfahren für ein solches zur Verfügung zu stellen, die eine verbesserte Ermittlung ermöglichen, ob ein Mobilfunkgerät zwischen einem Ausschalten und einem erneuten Einschalten örtlich bewegt wurde.

Die Aufgabe wird zum einen gelöst durch ein Mobilfunkgerät mit den Merkmalen des Anspruchs 1.

Zum anderen wird die Aufgabe gelöst durch das Verfahren aus Anspruch 8.

Die Erfindung macht sich zunutze, dass die Erfassung bestimmter Größen von Kanälen in einem Netzwerk, wie der EmgFangspegel, einen relativ geringen Energie- und Zeitaufwand erfordert. Wird eine solche Größe für alle in dem Netzwerk zur Verfügung stehenden Kanäle vor dem Ausschalten und nach dem Einschalten eines Mobilfunkgeräts verglichen, so steht dem Mobilfunkgerät quasi ein "Fingerabdruck" zur Verfügung, mittels dem es sich auch bei von der Bewegung unabhängiger Änderung der Größe einzelner Kanäle noch sicher verifizieren lässt, ob sich ein Mobilfunkgerät nach dem Einschalten noch in etwa an der gleichen Stelle befindet, wie vot dem Ausschalten. Das erfindungsgemäße Mobilfunkgerät und das erfindungsgemäße Verfahren ermöglichen somit eine verbesserte Erfassung einer Bewegung eines Mobilfunkgerätes zwischen einem Aus- und einem Einschalten.

Der Haupreinsatz ist im Rahmen der Kanalsuche durch Mobilfunkgeräte zu sehen, d.h. bei der Entscheidung, ob eine Liste von an dem vor dem Ausschalten aktuellen Aufenthaltsort bevorzugt zugrunde zu legenden Kanälen für die Kanalsuche verwender werden soll oder nicht, wodurch Zeir und Energie gespart werden kann.

Vorteilhafte Ausgestalrungen der Erfindung gehen aus den Unteransprüchen hervor.

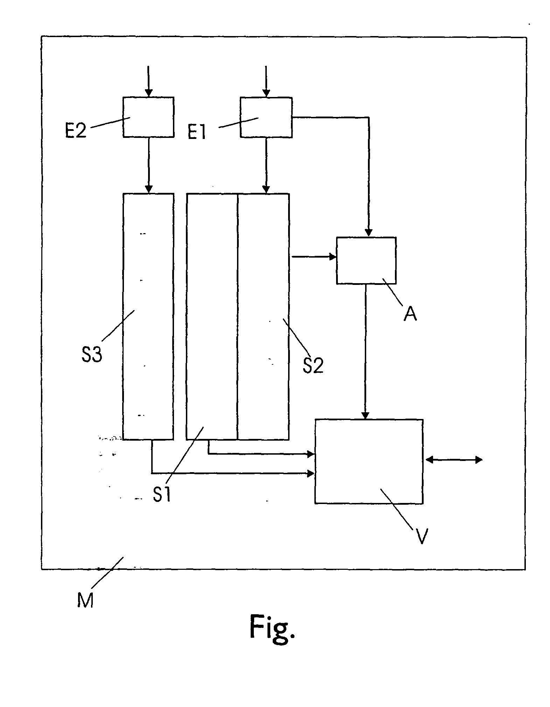

Das erfindungsgemäße Mobilfunkgerät und das erfindungsgemäße Verfahren werden im folgenden anhand eines Ausführungsbeispiels unter Bezugnahme auf eine Zeichnung näher erläutert. Dabei zeigt die einzige Figur

Fig. : in schematischer Weise die erfindungswesentlichen Elemente eines Mobilfunkgerätes.

Für das Ausführungsbeispiel sind in der Figur als Elemente eines Mobilfunkgerätes M für ein Telekommunikationsnetzwerk drei Speicherbereiche S1, S2, S3, zwei Erfassungsmittel E1, E2, Auswertmittel A und eine Verarbeitungseinheit V dargestellt.

In dem ersten Speicherbereich S1 des Mobilfunkgerätes M ist eine Liste mit allen Frequenzen des Telekommunikationsnetzwerkes abgelegt. Für GSM im 900er Band sind dies beispielsweise 124 verschiedene Frequenzen, für GSM im 800er Band 372 verschiedene Frequenzen.

In dem zweiten Speicherbereich S2 können zu den in dem ersten Speicherbereich S1 abgelegten Frequenzen gemessene Empfangspegel gespeichert werden.

In dem dritten Speicherbereich S3 werden stets diejenigen Frequenzen aus der Gesamtmenge an zur Verfügung stehenden Frequenzen gespeichert, die in dem geographischen Gebiet, in dem sich das Mobilfunkgerät zur Zeit befindet, als Kontroll-Frequenzen genutzt werden, und von diesen auch nur diejenigen, die den höchsten Empfangspegel aufweisen, beispielsweise die Kontroll-Frequenzen mit den sechs höchsten Empfangspegeln. Wie bereits zum Stand der Technik erwähnt, sind dabei die Kontroll-Frequenzen, diejenigen der Frequenzen, die die Basisstationen zum Aussenden von Informations- und Synchronisierungssignalen einsetzten.

Der zweite Speicherbereich S2 ist mit dem ersten Erfassungsmittel E1 und der dritte Speicherbereich S3 ist mit dem zweiten Erfassungsmittel E2 verbunden.

Die Speicherbereiche S1, S2, S3 können dabei in einem gemeinsamen Speichermedium vorhanden sein, ebenso können die Erfassungsmittel E1, E2 in einer einzigen, mit der Antenne (nicht dargestellt) des Mobilfunkgeräts 1 verbundenen Einheit realisiert sein.

Ein Ausgang der ersten Erfassungsmittel E1 sowie ein Ausgang des zweiten Speicherbereichs S2 sind mit Eingängen der Auswertemittel A verbunden.

Der Ausgang der Auswertemittel A hat seinerseits steuernden Zugriff auf eine Verarbeitungseinheit V. Weitere Eingänge der Verarbeitungseinheit V sind mit Ausgängen des ersten und des dritten Speicherbereich S1, S3 verbunden. Die Verarbeitungseinheit V hat schließlich über eine Antenne des Mobilfunkgerätes die Möglichkeit zu einem bidirektionalen Datenaustausch mit (nicht dargestellten) Basisstationen des Netzwerkes.

Das Mobilfunkgerät M des Ausführungsbeispiels in der Figur arbeitet entsprechend dem erfindungsgemäßen Verfahren wie folgt:

Beim Ausschalten des Mobilfunkgerätes M wird zu jeder der in dem ersten Speicherbereich S1 aufgeführten Frequenzen der Empfangspegel durch die Erfassungsmittel E1 erfasst und in dem Speicherbereich S2 den Frequenzen zugeordnet abgespeichert. Des weiteren werden die Kontroll-Frequenzen mit dem am jeweiligen Aufenthaltsort besten Empfang in dem dritten Speicherbereich S3 entweder in regelmäßigen Abständen oder beim Ausschalten abgelegt. Die Information darüber, welche Kontroll-Frequenzen für den gewünschten Dienstanbieter überhaupt oder in dem aktuellen geographischen Gebiet zur Verfügung stehen, kann entweder von den Basisstationen des Netzes übertragen werden oder in einer Speichereinheit, beispielsweise auf einer SIM-Card, festgelegt sein.

Wird nun das Mobilfunkgerät M wieder eingeschaltet, so erfassen die ersten Erfassungsmittel E1 die Empfangspegel von sämtlichen n in dem ersten Speicherbereich S1 abgespeicherten Frequenzen und liefern diese an die Auswertmittel A. Andererseits erhalten die Auswertmittel A aus dem zweiten Speicherbereich S2 die abgespeicherten Empfangspegel zu sämtlichen in dem ersten Speicherbereich S1 abgespeicherten Frequenzen. In den Auswertmitteln A wird aus den erhaltenen Empfangspegeln ein Wert d bestimmt, der ein Maß für die Gesamtabweichung zwischen den gespeicherten und den beim Einschalten gemessenen Empfangspegeln darstellt. Hierzu kann folgende Formel verwendet werden:

$$d = \frac{1}{n} \cdot \sqrt{\sum_{i=0}^{n} \left( Pegel\_alt_i - Pegel\_neu_i \right)^2}$$

Dabei wird mit $Pegel\_alt_i$ der vor dem Abschalten gespeicherte Empfangspegel des i-ten von n Kanälen bezeichnet, mit $Pegel\_neu_i$ der beim Einschalten gemessene Empfangspegel des i-ten von n Kanälen.

Der berechnete Wert d ermöglicht durch Vergleich mit einem festgelegten Grenzwert eine sichere Feststellung, ob das Mobilfunkgerät 1 zwischen dem Abschalten und dem Einschalten bewegt wurde. Aufgrund der großen Anzahl an Empfangspegeln, die verglichen werden, stellt die Abweichung d quasi einen Fingerabdruck dar, der eine deutliche Verbesserung in der Bewertung der erfassten Empfangspegel bedeutet.

Wenn die Abweichung d unterhalb eines festgelegten Grenzwertes liegt, so kann angenommen werden, dass das Mobilfunkgerät nicht bewegt wurde und dass die Liste mit den Kanälen weiterhin gültig ist. Liegt die Abweichung d dagegen oberhalb des festgelegten Grenzwertes, so kann angenommen werden, dass das Mobilfunkgerät bewegt wurde.

Der exakte Wert für den Grenzwert, also für die noch zu tolerierende Abweichung, ist dabei implementationsspezifisch und muss für jedes zellulare Netzwerk separat festgelegt werden.

Alternativ können die Empfangspegel aber auch einzeln verglichen werden, wobei dann eine bestimmte Anzahl an Frequenzen vorgegeben ist, die um einen maximalen Prozentwert voneinander abweichen dürfen, damit ein Verbleib am gleichen Ort noch angenommen werden kann.

Wurde entschieden, dass keine Bewegung stattgefunden hat, so werden von der Verarbeitungseinheit V aufgrund einer entsprechenden Ansteuerung durch die Auswertmittel A die Kontroll-Frequenzen in dem dritten Speicherbereich S3 für die Kanalsuche für anstehende Verbindungsaufbauten zugrunde gelegt. Es erfolgt also mit dieser sehr eingeschränkten Liste von Kanälen in Reihenfolge abfallender Empfangspegel eine Synchronisierung, ein Lesen von Daten und eine Aktualisierung von Ortsinformationen etc., bis ein brauchbarer Kanal gefunden wurde. Ansonsten wird von der Verarbeitungseinheit V sofort die Liste in dem ersten Speicherbereich S1 mit der Gesamtmenge von dem Telekommunikationsnetz zugeordneten Frequenzen in Reihenfolge abfallender Empfangspegel der Kanalsuche für einen Verbindungsaufbau zugrunde gelegt. Die Liste in dem dritten Speicherbereich S3 wird in diesem Fall gelöscht und mit aktualisierten Kontroll-Frequenzen neu erstellt.

Insgesamt wird somit mit dem erfindungsgemäßen Mobilfunkgerät und dem erfindungsgemäßen Verfahren die Sicherheit erhöht, dass weder eine Zeitverzögerung erfolgt, weil zunächst die eingeschränkte Liste in Speicherbereich S3 durchsucht wird, obwohl das Mobilfunkgerät bewegt wurde, noch eine langwierige Suche in allen Kanälen durchgeführt wird, obwohl das Mobilfunkgerät nicht bewegt wurde.

**Patentansprüche**

1. Mobilfunkgerät (M) für ein zellulares Netzwerk zum Übertragen von Sprache und/oder Daten, mit

   - einem ersten Speicherbereich (S1) zum Speichern von Frequenzen eines definierten Telekommunikationsnetzwerkes,
   - einem zweiten und dritten Speicherbereiche (S2, S3) zum Speichern von Empfangspegeln;
   - Erfassungsmitteln (E1, E2) zum Erfassen von Empfangspegeln,
   - Auswertmitteln (A) zum Vergleichen der Empfangspegel der Frequenzen, im ersten Speicherbereich (S1) mit anderen Empfangspegeln,

   **dadurch gekennzeichnet, dass**

   - im ersten Speicherbereich (S1) alle Frequenzen des Telekommunikationsnetzwerkes gespeichert sind, die für Verbindungen zwischen Basisstation und Mobilstation dieses Telekommunikationsnetzwerkes definiert sind;
   - die Erfassungsmittel (E1) zum Erfassen der Empfangspegel für alle in den ersten Speichermitteln (S1) gespeicherten Frequenzen vor dem Ausschalten und nach dem Einschalten des Mobilfunkgerätes (M) und zum Erfassen von am aktuellen Aufenthaltsort für eine Verbindung mit einer Basisstation bevorzugt in Betracht kommenden Kanälen angeordnet sind,
   - der zweite Speicherbereich (S2) zum Speichern der vor dem Ausschalten erfassten Empfangspegel aller im ersten Speicherbereich (S1) gespeicherten Frequenzen und
   - der dritte Speicherbereich (S3) zum Speichern einer Liste mit den am aktuellen Aufenthaltsort bevorzugt in Betracht kommenden Kanälen in regelmäßigen Intervallen oder jeweils beim Ausschalten des Mobilfunkgerätes (M) angeordnet sind,
   - die Auswertmittel (A) zum Ermitteln eines Abweichungswerres (d) vorgesehen sind, der ein aus der Gesamtheit der Abweichungen zwischen den im zweiten Speicherbereich (S2) gespeicherten Empfangspegeln und den nach dem Einschalten erfassten Empfangspegeln errechneter Kennwert (d) ist, wobei die Auswertmittel (A) zum Vergleichen des Abweichungswertes (d) mit einem festgelegten Wert vorgesehen sind, wobei eine Bewegung des Mobilfunkgerätes (M) zwischen Aus- und Einschalten vorliegt, wenn der Abweichungswert (d) den festgelegten Wert überschreitet und die Auswertmittel (A) bei Überschreiten des festgelegten Werts durch den Abweichungswert d die Gesamtheit der Frequenzen aus dem ersten Speicherbereich (S1) und ansonsten die im dritten Speicherbereich (S3) abgelegten Kanäle für die Kanalsuche für einen Verbindungsaufbau zugrunde legen.

2. Mobilfunkgerät (M) nach Anspruch 1, **dadurch gekennzeichnet, dass** sich die verschiedenen Kanäle durch ihre Frequenzen unterscheiden und dass die erfassten Empfanspegel die Empfangspegel der empfangenen Frequenzen sind.

3. Mobilfunkgerät (M) nach Anspruch 1 oder 2, **dadurch gekennzeichnet, dass** der die Abweichung der erfassten Größen von den gespeicherten Größen kennzeichnende Wert die Anzahl der sich über eine Vorgabe hinaus voneinander unterscheidender Größen ist.

4. Mobilfunkgerät (M) nach einem der Ansprüche 1 bis 3, **dadurch gekennzeichnet, dass** die Auswertmittel (A) geeignet sind, den Kennwert d durch die Formel

$$d = \frac{1}{n} \cdot \sqrt{\sum_{i=0}^{n} \left( Pegel\_alt_i - Pegel\_neu_i \right)^2}$$

zu bestimmen, mit n als Anzahl der im ersten Speicherbereich (S1) abgelegten Kanäle, Pegel_alt, als der vorm Abschalten im zweiten Speicherbereich (S2) gespeicherte Empfangspegel des i-ten der n Känale,und Pegel_neu$_i$ als der beim Einschalten von den Erfassungsmitteln (E1) gemessene Empfangspegel des i-ten der n Kanäle.

5. Mobilfunkgerät (M) nach einem der Ansprüche 1 bis 4, **dadurch gekennzeichnet, dass** die in dem ersten Speicherbereich (S1) gespeicherten Frequenzen die Kanäle eines festgelegten Frequenzbandes mit einer festgelegten Bandbreite pro Kanal darstellen.

6. Mobilfunkgerät (M) nach einem der Ansprüche 1 bis 5, **dadurch gekennzeichnet, dass** es für den Einsatz in einem analogen oder einem digitalen zellularen Netzwerk geeignet ist.

7. Mobilfunkgerät (M) nach einem der Ansprüche 1 bis 6, **dadurch gekennzeichnet, dass** es für den Einsatz in einem DCS1800-, GSM- oder PCS1900- Netzwerk geeignet ist.

8. Verfahren zum Ermitteln, ob sich ein Mobilfunkgerät (M) in einem zellularen Netzwerk zwischen einem Ausschalten und einem Einschalten räumlich bewegt hat, bei dem Empfangspegel von Kanälen und Frequenzen erfasst und gespeichert werden und gespeicherte Empfangpegel miteinander verglichen werden, **gekennzeichnet durch** die Schritte:

- Speichern aller Frequenzen eines definierten Telekommunikationsnetzwetkes, die für Verbindungen zwischen Basisstation und Mobilstation dieses Telekommunikationsnetzwerkes definiert sind in einem ersten Speicherbereiche (S1) und Speichern der Kanäle mit dem am Aufenthaltsort besten Empfang in einem dritten Speicherbereich (S3),

a) Erfassen von Empfangspegeln für alle dem Netzwerk zugeteilten Frequenzen des Telekommunikationsnerzwerkes beim Ausschalten des Mobilfunkgeräts (M) und Speichern der Empfangspegel in einem zweiten Speicherbereich (S1),

b) Erfassen der Empfangspegel von allen dem Netzwerk zugeteilten Frequenzen des Telekommunikationsnetzwerkes beim Einschalten des Mobilfunkgeräts (M),

c) Vergleichen der unter a) gespeicherten und der unter b) erfassten Empfangspegeln in ihrer Gesamtheit und Bestimmung eines Abweichungswertes (d), der ein aus der Gesamtheit der Abweichungen zwischen den im zweiten Speicherbereich (S2) gespeicherten Empfangspegeln und den nach dem Einschalten erfassten Empfangspegeln errechneter Kennwert (d) ist, und d) Vergleichen des Abweichungswerts (d) mit einem vorgegebenen Wert und Bewertung, dass das Mobilfunkgerät (M) zwischen einem Aus- und einem Einschalten nicht bewegt wurde, falls der Abweichungswert (d) unterhalb des vorgegebenen Wertes liegt, anderenfalls Bewertung, dass das Mobilfunkgerät (M) zwischen Ausschalten und Einschalten bewegt wurde; wobei

e) bei Überschreiten des festgelegten Werts **durch** den Abweichungswert (d) die Gesamtheit der Frequenzen aus dem ersten Speicherbereich (S1) und ansonsten die im dritten Speicherbereich (S3) abgelegten Kanäle für die Kanalsuche für einen Verbindungsaufbau zugrunde gelegt werden.

## Claims

1. A mobile radio device (M) for a cellular network for transmission of speech and/or data, including

- a first storage area (S1) for storing frequencies of a defined telecommunication network,
- a second and a third storage area (S2, S3) for storing receiving levels;
- detection means (E1, E2) for detecting receiving levels,
- evaluation means (A) for comparing the receiving levels of the frequencies in the first storage area (S1) with other receiving levels,

**characterized in that**

- all the frequencies of the telecommunication network which are defined for connections between base station and mobile station of this telecommunication network are stored in the first storage area (S1),
- the detection means (E1) are arranged for detecting the receiving levels for all the frequencies stored in the first storage means (S1) before switch off and after switch on of the mobile radio device (M) and for detecting channels preferably taken into consideration at the current location for a connection with a base station,
- the second storage area (S2) is arranged for storing the receiving levels detected before the switch off for all frequencies stored in the first storage area (S1), and
- the third storage area (S3) is arranged for storing at regular intervals or each time when the mobile radio device (M) is switched off a list containing the channels that are preferably to be used at the current location,
- the evaluation means (A) are arranged for determining a deviation value (d), which is a parameter (d) calculated from the total of the deviations between the receiving levels stored in the second storage area (S2) and the receiving levels detected after the switch on, where the evaluation means (A) are arranged for comparing the deviation value (d) with a fixed value, where there is a movement of the mobile radio device (M) between switch off and switch on when the deviation value (d) exceeds the fixed value and when the fixed value is exceeded by the deviation value (d) the evaluation means (A) take the total of the frequencies from the first storage area (S1) and further the channels stored in the third storage area (S3) as a basis for the channel search for setting up a connection.

2. A mobile radio device (M) as claimed in claim 1, **characterized in that** the various channels are different in respect of their frequencies and that the detected receiving levels are the frequency levels of the received frequencies.

3. A mobile radio device (M) as claimed in claim 1 or 2, **characterized in that** the value characterizing the deviation between the variables determined and the variables stored is the number of variables deviating from one another beyond a specified value.

4. A mobile radio device (M) as claimed in one of the claims 1 to 3, **characterized in that** the evaluation means (A) are arranged to determine the characteristic value (d) by way of the formule

$$d = \frac{1}{n} \cdot \sqrt{\sum_{i=0}^{n} \left( Pegel\_alt_i - Pegel\_neu_i \right)^2}$$

where n is the number of channels stored in the first storage area (S1), $Pegel\_alt_i$ is the receiving level of the $i^{th}$ channel from among the n channels, which level is stored in the second storage area (S2) before the switch off, and $Pegel\_neu_i$ is the receiving level of the $i^{th}$ channel from among the n channels, which level is measured by the detection means (E1) upon switch on.

5. A mobile radio device as claimed in one of the claims 1 to 4, **characterized in that** the frequencies stored in the first storage area (S1) are the channels of a specified frequency band with a specified bandwidth per channel.

6. A mobile radio device (M) as claimed in one of the claims 1 to 5, **characterized in that** it is suitable for use in an analog or in a digital cellular network.

7. A mobile radio device (M) as claimed in one of the claims 1 to 6, **characterized in that** it is suitable for use in a DCS 1800 network, a GSM network or a PCS 1900 network.

8. A method of determining whether a mobile radio device (M) in a cellular network has physically been moved between a switch off and a subsequent switch on of the mobile radio device, in which receiving levels of channels and frequencies are detected and stored receiving levels are compared with each other, **characterized by** the steps of:

- storing all the frequencies of a defined telecommunication network which are defined for connections between base station and mobile station of this telecommunication network in a first storage area (S1) and storing the channels with the best reception at the location in a third storage area (S3),

a) detecting receiving levels for all the frequencies of the telecommunication network allocated to the network when the mobile radio device (M) is switched off and storing the receiving levels in a second storage area (S1),

b) detecting the receiving levels of all the frequencies of the telecommunication network allocated to the network when the mobile radio device (M) is switched on,

c) comparing the total of the receiving levels stored re a) and detected re b) and determining a deviation value (d) which is a parameter calculated from the total of the deviations between the receiving levels stored in the second storage area (S2) and the receiving levels detected after the switch on, and

d) comparing the deviation value (d) with a fixed value and evaluating that the mobile radio device (M) has not been moved between switch off and switch on in case the deviation value (d) is lower than the fixed value, and in the other case evaluating that the mobile radio device (M) has been moved between switch off and switch on, where

e) when the fixed value is exceeded by the deviation value (d) the total of the frequencies from the first storage area (S1) and further the channels stored in the third storage area (S3) is taken as a basis for the channel search for setting up a connection.

## Revendications

1. Appareil mobile à radio (M) pour un réseau cellulaire pour la transmission de parole et/ou de données avec
   une première zone de mémoire (S1) pour l'enregistrement de fréquences d'un réseau de télécommunication défini,
   une deuxième et une troisième zone de mémoire (S2, S3) pour l'enregistrement de niveaux de réception,
   des moyens de saisie (E1, E2) pour la saisie de niveaux de réception,
   des moyens d'évaluation (A) pour la comparaison des niveaux de réception des fréquences dans la première zone de mémoire (S1) avec d'autres niveaux de réception,
   **caractérisé en ce**

   - **que**, dans la première zone de mémoire (S1), toutes les fréquences du réseau de télécommunication sont enregistrées et sont définies pour des liaisons entre la station de base et la station mobile de ce réseau de télécommunication ;
   - des moyens de saisie (E1) sont disposés pour la saisie des niveaux de réception pour toutes les fréquences enregistrées dans les premiers moyens de mémoire (S1) avant la mise hors tension et après la mise sous tension de l'appareil mobile à radio (M) et pour la saisie de canaux pris en considération de préférence sur le site de séjour actuel pour une liaison avec une station de base,
   - la deuxième zone de mémoire (S2) est disposée pour l'enregistrement des niveaux de réception saisis avant la mise hors tension de toutes les fréquences enregistrées dans la première zone de mémoire (S1) et
   - la troisième zone de mémoire (S3) pour l'enregistrement d'une liste avec les canaux pris en considération de préférence sur le lieu de séjour actuel à intervalles réguliers ou respectivement lors de la mise hors tension de l'appareil mobile à radio (M),
   - les moyens d'évaluation (A) pour la détermination d'une valeur d'écart (d) sont prévus et constituent un indice (d) calculé à partir de la totalité des écarts entre les niveaux de réception enregistrés dans la deuxième zone de mémoire (S2) et les niveaux de réception enregistrés après la mise sous tension, les moyens d'évaluation (A) étant prévus pour la comparaison de la valeur d'écart (d) avec une valeur préalablement déterminée, auquel cas un mouvement de l'appareil mobile à radio est présent entre la mise hors et sous tension lorsque la valeur d'écart (d) dépasse la valeur déterminée et les moyens d'évaluation (A) se basent, en cas de dépassement de la valeur définie par la valeur d'écart d, sur la totalité des fréquences de la première zone de mémoire (S1) et, sinon, sur les canaux enregistrés dans la troisième zone de mémoire (S3) pour la recherche de canaux pour l'établissement d'une liaison.

2. Appareil mobile à radio (M) selon la revendication 1, **caractérisé en ce que** les différents canaux se distinguent par leurs fréquences et que les niveaux de réception saisis sont les niveaux de réception des fréquences reçues.

3. Appareil mobile à radio (M) selon l'une des revendications 1 ou 2, **caractérisé en ce que** la valeur caractérisant l'écart entre les grandeurs saisies et les grandeurs enregistrées est le nombre des grandeurs différant l'une de l'autre au-delà d'une détermination préalable.

4. Appareil mobile à radio (M) selon l'une des revendications 1 à 3, **caractérisé en ce que** les moyens d'évaluation (A) conviennent pour déterminer l'indice d par la formule

$$d = \frac{1}{n} \sqrt{\sum_{i=0}^{n} (niveau\_ancien_i - niveau\_nouveau_i)^2}$$

avec n le nombre de canaux enregistrés dans la première zone de mémoire (S1), niveau_ancien; le niveau de réception enregistré avant la mise hors tension du i$^{ème}$ des n canaux et niveau_nouveau, le niveau de réception mesuré lors de la mise sous tension du i$^{ème}$ des n canaux.

5. Appareil mobile à radio (M) selon l'une des revendications 1 à 4, **caractérisé en ce que** les fréquences enregistrées dans la première zone de mémoire (S1) représentent les canaux d'une gamme de fréquences préalablement déterminée avec une largeur de bande préalablement déterminée par canal.

6. Appareil mobile à radio (M) selon l'une des revendications 1 à 5, **caractérisé en ce qu'**il convient pour une utilisation dans un réseau cellulaire analogique ou numérique.

7. Appareil mobile à radio (M) selon l'une des revendications 1 à 6, **caractérisé en ce qu'**il convient pour une utilisation dans un réseau DCS 1800, GSM ou PCS 1900.

8. Procédé de détermination du déplacement spatial d'un appareil mobile à radio (M) dans un réseau cellulaire entre une mise hors tension et une mise sous tension, dans lequel les niveaux de réception de canaux et de fréquences sont saisis et enregistrés et les niveaux de réception enregistrés sont comparés l'un à l'autre, **caractérisé par** les étapes suivantes :

   - enregistrement de toutes les fréquences d'un réseau de télécommunication défini qui sont déterminées pour les liaisons entre la station de base et la station mobile de ce réseau de télécommunication dans une première zone de mémoire (S1) et enregistrement des canaux avec la meilleure réception sur le site de séjour dans une troisième zone de mémoire (S3),

      a) saisie de niveaux de réception pour toutes les fréquences, attribuées au réseau, du réseau de télécommunication lors de la mise hors tension de l'appareil mobile à radio (M) et enregistrement des niveaux de réception dans une deuxième zone de mémoire (S2),
      b) saisie des niveaux de réception de toutes les fréquences, attribuées au réseau, du réseau de télécommunication lors de la mise sous tension de l'appareil mobile à radio (M),
      c) comparaison des niveaux de réception enregistrés sous a) et saisis sous b) dans leur totalité et détermination d'une valeur d'écart (d) qui est un indice (d) calculé à partir de la totalité des écarts entre les niveaux de réception enregistrés dans la deuxième zone de mémoire (S2) et l'indice calculé après la mise sous tension des niveaux de réception saisis, et
      d) comparaison de la valeur d'écart (d) avec une valeur préalablement déterminée et évaluation que l'appareil mobile à radio (M) n'a pas été déplacé entre la mise hors tension et la mise sous tension si la valeur d'écart (d) se situe en dessous de la valeur préalablement déterminée ; sinon, évaluation que l'appareil mobile à radio (M) a été déplacé entre la mise hors tension et la mise sous tension, auquel cas
      e) en cas de dépassement de la valeur déterminée par la valeur d'écart (d), la totalité des fréquences de la première zone de mémoire (S1) et, sinon, les canaux enregistrés dans la troisième zone de mémoire (3), sont à la base de la recherche de canal pour l'établissement d'une liaison.

Fig.